# EUROPEAN PATENT APPLICATION

(11) **EP 1 978 703 A1**
(43) Date of publication of application: **08.10.2008**
(21) Application number: 07251458.1
(22) Date of filing: 02.04.2007
(51) Int. Cl.: H04L 29/06

(54) **Method of transferring data packets**

(71) Applicant: BRITISH TELECOMMUNICATIONS public limited company, London EC1A 7AG (GB)
(72) Inventor: The designation of the inventor has not yet been filed
(74) Representative: Williamson, Simeon Paul

(57) **Abstract**

Client packets sent from a client machine traverse several network domains to arrive at a server. Prior to leaving the client's network domain, the client's source address field in the packet header is encrypted the client's network address and the domain network address is appended to the source address field. Each traversed domain also encrypts the source header address of each received packet and appends its own network address. Packets sent from a server in response to the client request must traverse the network domains in the reverse order to the path taken by the client packets. When the packets cannot follow the reverse path due to a break between domains, the packets are tunnelled via an alternative route via other domains before resuming the original return path.

## Description

### Field of the Invention

This invention relates to network security and in particular to mitigating the likelihood of denial of service attacks against a client.

### Background to the Invention

Internet Security is an ever present concern to users and system administrators. There are many ways in which an attacker can compromise or impair the performance of a network. One common attack is the Denial of Service (DoS) attack. Essentially this involves an attacker sending traffic to a victim computer at a rate which overwhelms the resources of the victim computer so that the victim computer can no longer deal satisfactorily with legitimate requests from normal users.

A paper by Mark Handley and Adam Greenhalgh of University College London, entitled "Steps Towards a DoS resistant Internet Architecture" (Applications, Technologies, Architectures, and Protocols for Computer Communication, Proceedings of the ACM SGCOMM workshop on Future directions in network architecture, Portland, Oregon, USA SESSION: New Architectures, Pages 49-56, Year of publication: 2004, ISBN: 1-58113-942-9) discusses Denial of Service attacks in detail and also proposes an approach for mitigating these attacks.

### Summary of the Invention

In a first aspect, the present invention provides a method of transferring a response data packet from a server on first network domain to a client on second network domain, the first and second domain being separated by at least one intermediate domain, the response data packet having a source address and a destination address field containing routing information defining the order in which the data packet must travel from the first network domain to the second network domain via the at least one intermediate domain, the method comprising the steps of: receiving a response data packet; identifying the next domain for the data packet in accordance to the destination address field routing information; and forwarding the data packet to the identified domain; wherein, in a case where the identified network domain is not reachable, updating the source address to include routing information identifying the path the data packet has taken to arrive at the destination; and tunnelling the data packet via at least one further intermediate network domain to arrive at the intended network domain.

In a second aspect, the present invention provides a method of transferring a response data packet from a server on a first network domain to a client on a second network domain, the response data packet having a destination address field containing the client's encrypted network address and a network address associated with the second network domain, the method comprising the steps of: routing the response data packet from the server on the first domain to the network address associated with the second network domain; decrypting the client's network address at the second domain; and routing the response data packet to the client's network address; wherein, in a case where a connection between the first domain and the second domain is not available, tunnelling the response data packet by carrying out the steps of: appending a network address associated with the first network domain to the source address of the response data packet; and forwarding the response data packet to at least one further network domain located between the first network domain and the second network domain, the at least one further network domain being operable to route the response data packet to the second network domain.

Preferable features are set out in the dependent claims.

### Brief Description of the Drawings

In order that the present invention be better understood, an embodiment thereof will now be described with reference to the accompanying drawings in which:
Figure 1 schematically shows an overview of an inter-network having three network domains in a first example;
Figure 2 schematically shows a changes to the header of a data packet travelling from a client to a server across the domains illustrated in Figure 1 and a changes to the header of a reply data packet travelling from the server to the client;
Figure 3 schematically an overview of an inter-network of five domains where a break has occurred between two of the domains; and
Figure 4 schematically shows changes to the header of data packet travelling from the server to the client across the domains illustrated in Figure 3.

### Detailed Description

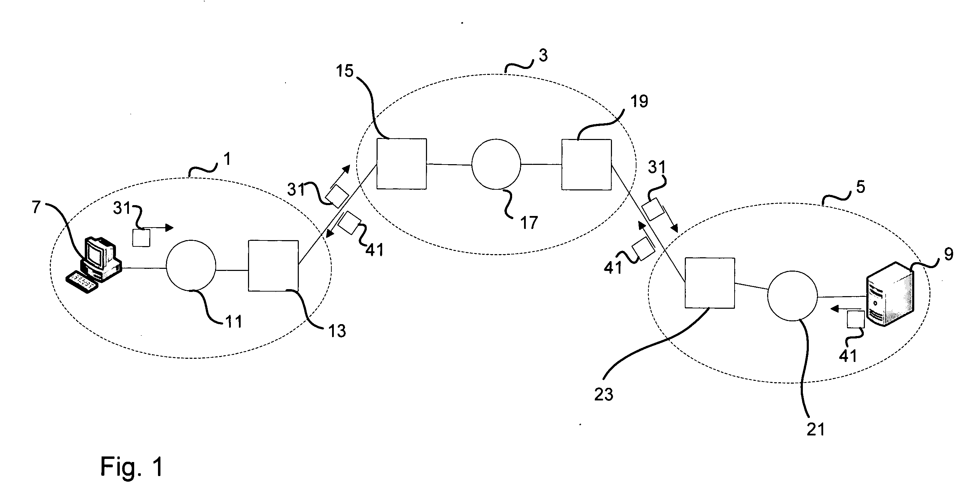

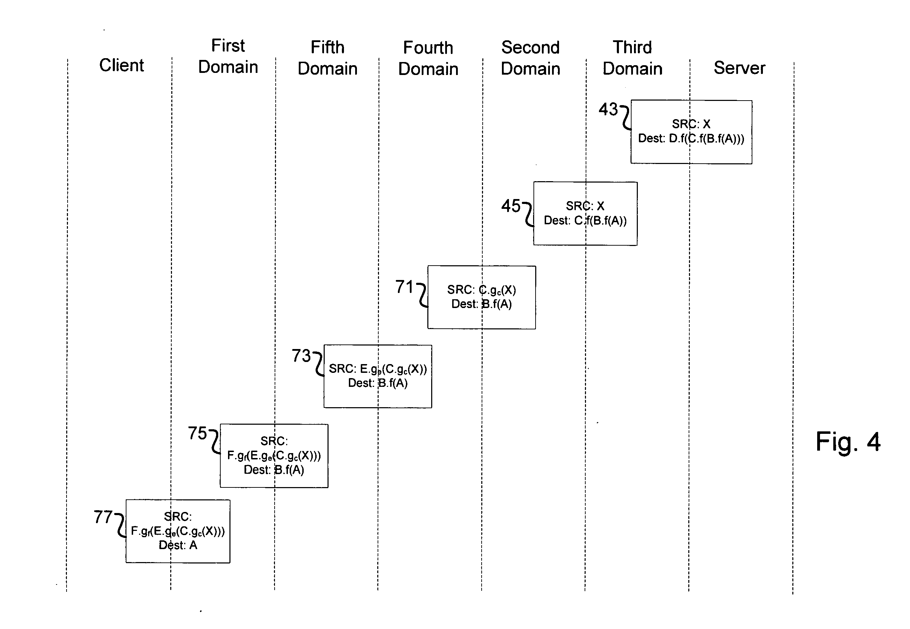

The operation of the packet delivery method will now be described with reference to Figures 1 to 4.

Figure 1 schematically shows an inter-network comprising three network domains 1, 3, 5 which inter-connect a client 7 to a server 9. The first domain 1 includes a client home computer 7 connected to via an internal network 11 to an ingress/egress router 13. The second domain 3 includes a first ingress/egress router 15 connected via an internal network 17 to a second egress/ingress router 19. The third domain 5 includes a server 9 connected via internal network to an ingress/egress router 21.

As is known in the art, each ingress/egress router is a router on the edge of a domain and therefore in communication with routers in other domains in addition to the internal network. The term ingress router will be used when the router is receiving data packets from an external domain and the term egress router will be used when the router is sending data packets to an external domain.

In Figure 1, egress router 13 is connected to ingress router 15 to allow communication between the first domain and the second domain. Furthermore egress router 19 is connected to ingress router. 23 to allow communication between the second domain 3 and the third domain 5.

When an application running on the client 7 requires information from the server 9, the application constructs a request to the server 9 and this request is then packetised into a set of IP packets having the IP address of server 9 in the destination field. In the network configuration shown in Figure 1, the packets take the following path from the client 7 to the server 9: first domain 1 [client 7 -> internal network 11 -> egress router 13] -> second domain 3 [ingress router 15, internal network 17, egress router 19] -> third domain 5 [ingress router 23 -> internal network 21 -> server 9].

In this embodiment, to ensure that the IP address of the client 7 does not have global significance, the IP address of the client 7 stored in the source field of the IP packet header is encrypted by the egress router 13 before it leaves the first domain 1. Furthermore, the egress router of each domain along the path from the client to the server encrypts the source address. In this embodiment, the IP address is encrypted using a symmetrical encryption technique.

To ensure that the packet source address can be successfully decrypted, each domain also appends its own address to the packet header. This also serves to provide a trace route of the path from the client to the server.

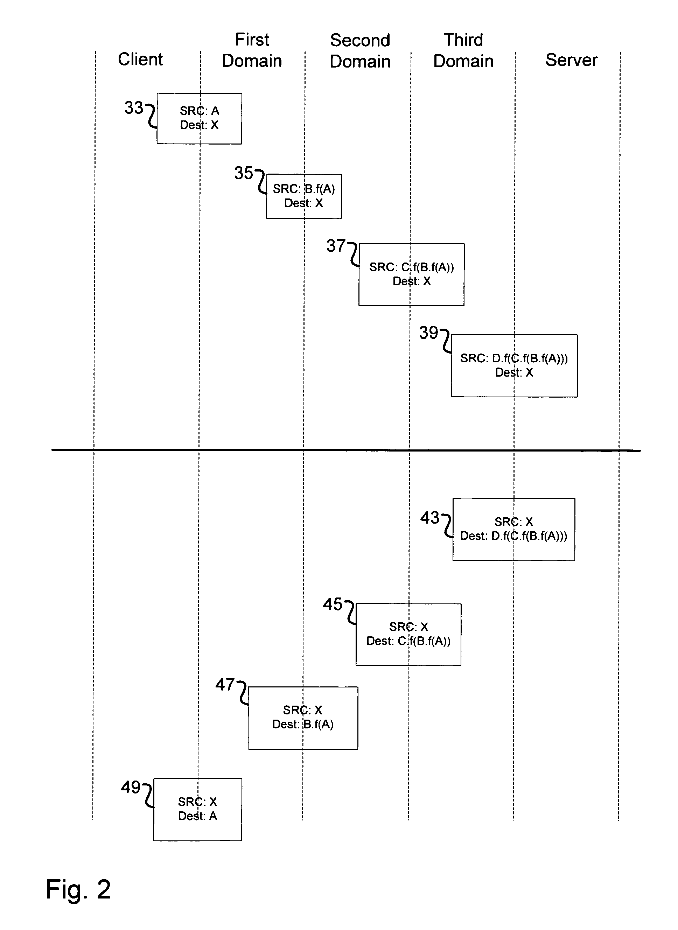

The steps taken to transfer an exemplary IP packet 31 from the client to the server will now be described with reference to Figures 1 and 2. Although the movement of only a single IP packet is described for ease of explanation, the other IP packets forming the client request will follow a similar path.

Figure 2 shows the changes made to the source address and destination fields of an IP packet 31 at each stage as it travels from the client to the server. The routers only manipulate the packet header and in particular the source and destination fields of the packet header. The payload of each IP packet is not examined. Each domain is operable to encrypt the source field of the IP packet 31 with its own encryption key and then to append an address identifying the domain. In the example below, the IP address of the client 7 is represented by value 'A', the IP address of the server is represented as value 'X', the IP address of the egress router 13 of the first domain 1 is represented as value 'B', the IP address of the ingress router 15 of the second domain is represented as 'C' and the IP address of the ingress router 23 of the third domain is 'D'.

The IP packet 31 sent from the client 7 has the following header information 33:

| | |
|---|---|
| Source address: | A |
| Destination address: | X |

The packet 31 is transferred to the internal network 11 which determines from an internal routing table (not shown) that the server 9 resides in a different domain and that the packet should be sent to egress router 13 for subsequent forwarding to the second domain.

On receiving the client packet 31, egress router 13 checks whether the packet's destination address matches its own address B. Since it does not (the destination address is that of the server 'X'), egress router 13 encrypts the source IP address 'A' of the client 7 using encryption function f_{b}() and appends its own IP address 'B' into the source field of the packet header to indicate that the received source address has been encrypted by egress router 13. The egress router 13 sends the packet to ingress router 15 belonging to the second domain 3 with the following header information 35:

| | |
|---|---|
| Source: | B.f_{b}(A) |
| Destination: | X |

On receiving the client packet, ingress router 15 checks whether the packet's destination addresses matches its own address 'C'. Since it does not, ingress router 15 encrypts the source IP address of the packet B.f_{b}(A) using encryption function f_{c}()and appends its own IP address 'C' to the source field of the packet.

Ingress router 15 then forwards the packet 31 to the internal network 17 with the following header information 37:

| | |
|---|---|
| Source: | C.f_{c}(B.f_{b}(A)) |
| Destination: | X |

Internal network 17 of the second domain 3 internal network 11 determines from an internal routing table (not shown) that the server 9 resides in a different domain and that the packet should be sent to egress router 19 for subsequent forwarding to the third domain 5. Egress router 19 then forwards the packet to ingress router 23 of the third domain 5 without changing the packet header.

On receiving the client packet, ingress router 23 of the third domain checks whether the packet's destination addresses matches its own address 'D'. Since it does not, ingress router 23 encrypts the source IP address of the packet C.fc(B.fb(A)) using encryption function fd()and appends its own IP address 'D' to the source field of the packet.

Ingress router 15 then forwards the packet 31 to the internal network 17 with the following header information 39:

| | |
|---|---|
| Source: | D.f_{d}(C.f_{c}(B.f_{b}(A))) |
| Destination: | X |

The internal network of the third domain determines from a local routing table that the server 9 is located in the third domain 5 and therefore forwards the packet to the server 9.

When the client packet 31 arrives at server 9, the server removes the IP header to extract the client request from the packet payload.

Using the above method, the client's 7 source address is hidden as it travels across domains to the server. Since the client's address is encrypted before leaving its own domain, the client does not have global significance making it much harder for an attacker to launch a DoS attack against the client.

When the server needs to send a reply to the client, it cannot simply create a response packet addressed to the client because it does not know the client's IP address. It also cannot extract the client's IP address from the received client packet because client's source address has been encrypted by at least one ingress/egress router en-route to the server.

However, the server does know that the client can be reached by sending a response packet (hereinafter referred to as a server packet 41) having a destination address of D.f_{d}(C.f_{c}(B.f_{b}(A))). Therefore the server packages its response into IP packets and sends them to the internal network 21. The flow of a single server packet 41 from the server to the client will now be described.

The server packet 41 sent from the server has the following header information 43:

| | |
|---|---|
| Source: | X |
| Destination: | D.f_{d}(C.f_{c}(B.f_{b}(A))) |

The internal network of the third domain determines from a local routing table that the IP address 'D' is that of egress router 23 which is located in the third domain 5 and therefore forwards the server packet to the egress router 23.

On receiving the server packet 41, the egress router 23 of the third domain checks whether the server packet's destination addresses matches its own address 'D'. Since it does, egress router 23 strips off its IP address from the destination field and decrypts the remaining destination field of the server packet using in the inverse of encryption function f_{d}() to reveal a new destination address C.f_{c}(B.f_{b}(A)).

The egress router 23 sends the server packet to the ingress router 19 of the second domain with the following header structure:

| | |
|---|---|
| Source: | X |
| Destination: | C.fc(B.fb(A)). |

On receiving the server packet 41, the ingress router 19 of the second domain forwards the packet to the internal network 17 without changing the packet header.

The internal network 17 determines that address 'C' is the address of the egress router 15 and forwards the server packet.

On receiving the server packet 41, the egress router 15 checks whether the server packet's destination address matches its own address 'C'. Since it does, egress router 15 strips off its IP address from the destination field and decrypts the remaining destination field of the server packet using the inverse of encryption function f_{c}() to reveal a new destination address B.f_{b}(A).

The egress router 15 sends the server packet 41 to the ingress router 13 of the first domain 1 with the following header structure:

| | |
|---|---|
| Source: | X |
| Destination: | B.f_{b}(A) |

On receiving the server packet, the ingress router 13 of the first domain 1 checks whether the server packet's destination address matches its own address 'B'. Since it does, ingress router 19 strips off its IP address from the destination field and decrypts the remaining destination field of the server packet using the inverse of encryption function f_{b}() to reveal a new destination address A.

The ingress router 13 sends the server packet to the internal network 17 of the first domain with the following header structure:

| | |
|---|---|
| Source: | X |
| Destination: | A |

The internal network 11 of the first domain determines from its local routing table that the client 7 is located in the first domain 5 and therefore forwards the packet to the client 7.

On receiving the server packet, the client 7 strips off the entire IP header and extracts the server response from the packet's payload.

The above technique for packet delivery is advantageous in mitigating the likelihood of a denial of service attack against the client 7 because the client's IP address is not available outside of its own domain. By using encryption before the packet is sent to a different domain, attackers located in other domains cannot learn the client's IP address by intercepting packets. The client's IP address only has local significance.

Furthermore, by appending the IP address of each ingress/egress router which carries out encryption/decryption on the packet header, the packets take a symmetric path from the client to the server and from the server to the client. In other words, the inter domain path for a response packet from the server to the client must travel via the same domains as the original outgoing packet but in the reverse order so that it can be successfully decrypted.

This symmetry can leads to problems if the network topology changes for any reason, for example due to a failed link between the first and second domains 1,3. In particular, if the client 7 sends a client packet to the server in the manner described above, but an inter-domain link breaks down before a server response packet sent from the server can reach the client 7, the connection between the client 7 and the server 9 will be lost because the server packets from the server to the client cannot take the same path as the originating packet path.

To overcome this problem, packets are tunnelled via an alternate path across domains.

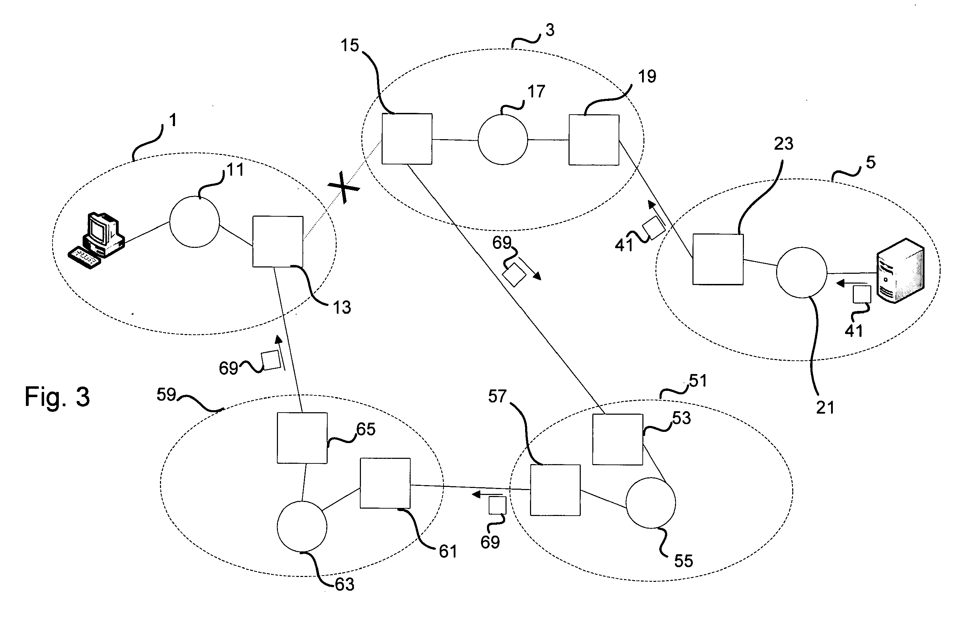

Figure 3 shows an extended network topology to explain the path taken by a response packet sent from the server 9 to the client 7 in a case where the one of the inter-domain links has failed. The network shown in Figure 3 includes a fourth domain having 51 having an ingress/egress router 53 connected via an internal network 55 to an egress/ingress router 57 and a fifth domain 59 having an ingress/egress router 61 connected via an internal network 63 to an egress/ingress router 65.

The first domain is linked to the fifth domain via a connection between the egress/ingress router 15 of the first domain and the ingress/egress router 65 of the fifth domain. The fifth domain is linked to the fourth domain via a connection between the egress/ingress router 61 of the fifth domain and the ingress/egress router 57 of the fourth domain. The fourth domain is linked to the second domain via a connection between the egress/ingress router 53 of the fourth domain 51 and the ingress/egress router 15 of the second domain.

As described above, the server sends a server packet 41 having a destination address of D.f_{d}(C.f_{c}(B.f_{b}(A))). The packets travel via the internal network 21 of the third domain 5 to the egress router 23 which strips off its own IP address 'D' from the received packet and decrypts the remaining destination header to obtain the next intermediate destination address 'C' belonging to the egress router 15 of the second domain 3. The egress router 23 places the decrypted destination address C.f_{c}(B-f_{b}(A)) into the server response packet and forwards the server response packet to the ingress router 19 of the second domain 3.

When the ingress router 19 receives the server packet 41, the ingress router 19 forwards the packet to the egress router 15 without manipulating the packet headers. Egress router 15 strips off its own IP address 'C' from the packet header and decrypts the remaining header to obtain the next intermediate destination address B.f_{b}(A), where 'B' is the IP address of the ingress router 13 of the first domain 1.

However the link between ingress router 13 of the first domain and egress router 15 of the second domain is broken, so the packets must be delivered via an alternative path.

The egress router 15 determines from its routing tables that the next shortest path to the ingress router 13 of the first domain is via a fourth and fifth domain 51, 59.

The egress router 15 forms a new indirect connection to ingress router 13 and to ensure that there is a symmetric flow of packets between these two ingress/egress routers 13, 15, the egress router 15 and routers in the fourth and fifth domain will also encrypt the source address field and append their own respective IP address. In the following example, the ingress router 53 of the fourth domain 51 has an IP address represented by 'E', and the ingress router 61 of the fifth domain 59 has an IP address represented by 'F'. To distinguish between the operation of the tunnelling technique, the egress router 15, the ingress router 53 and the ingress router 61 use an encryption function denoted by g().

The egress router 15 treats the server packet 41 as a tunnelled server packet 69. The egress router 15 encrypts the source address of the server packet using encryption function g_{c}() and appends its own IP address 'C' to the source field of the server response packet and then sends the tunnelled server packet 69 to ingress router 53 of the fifth domain. The packet sent by egress router 15 has the following packet header information 71:

| | |
|---|---|
| Source: | C.g_{c}(X) |
| Destination: | B.f_{b}(A) |

On receiving the tunnelled server packet 69, ingress router 53 checks whether the packet's destination address matches its own address 'E'. Since it does not, ingress router 33 encrypts the source address using encryption function gₑ() and appends its own IP address 'E' into the source field of the packet header. The ingress router 53 sends the packet to the internal network 55 with the following header information 73:

| | |
|---|---|
| Source: | E.gₑ(C.g_{c}(X)) |
| Destination: | B.f_{b}(A) |

The internal network of the fourth domain determines from a local routing table that the IP address 'B' is not in the fourth domain but can be reachable via the fifth domain 59 and therefore forwards the tunnelled server packet 69 to the egress router 57. Egress router 57 then forwards the packet to ingress router 61 of the fifth domain 5 without changing the packet header.

On receiving the tunnelled server packet 69, ingress router 61 of the fifth domain 59 checks whether the packet's destination addresses matches its own address 'F'. Since it does not, ingress router 61 encrypts the source IP address E.gₑ(C.g_{c}(X)) of the packet using encryption function g_{f}() and appends its own IP address 'F' to the source field of the packet.

The ingress router 46 sends the packet 69 to the internal network 63 with the following header information 75:

| | |
|---|---|
| Source: | F.g_{f}(E-gₑ(C.g_{c}(X))) |
| Destination: | B.f_{b}(A) |

The internal network 63 of the fifth domain determines from a local routing table that the IP address 'B' is that of ingress router 13 which is located in the first domain 1 and therefore forwards the tunnelled server packet 69 to the egress router 65. Egress router 65 then forwards the packet to ingress router 13 of the first domain 1 without changing the packet header.

On receiving the tunnelled server packet 69, the ingress router 13 of the first domain 1 checks whether the tunnelled server packet's destination address matches its own address 'B'. Since it does, ingress router 19 strips off its IP address from the destination field and decrypts the remaining destination field of the server packet using the inverse of encryption function f_{b}() to reveal a new destination address A.

The ingress router 13 sends the tunnelled server packet 69 to the internal network 17 of the first domain with the following header information 77:

| | |
|---|---|
| Source: | F-g_{f}(E-gₑ(C-g_{c}(X))) |
| Destination: | A |

The internal network 11 of the first domain determines from its local routing table that the client 7 having the IP address 'A' is located in the first domain 5 and therefore forwards the packet to the client 7.

On receiving the server packet, the client 7 strips off the entire IP header and extracts the server response.

Using the method of tunnelling described above, a client and server located in different domains can continue to securely exchange data even when a break occurs between the intermediate domains.

In addition, if the client 7 wishes to send more data (requests) to the server 9, it can send a packet having the following data structure:

| | |
|---|---|
| Source: | A |
| Destination: | F.g_{f}(E.gₑ(C.g_{c}(X))) |

In this way, inter-domain communication between the client and the server is more secure because an attacker cannot deduce, from a client or server packet, either the client's IP address or the server's IP address.

### Alternatives and modifications

In the embodiment, the source address of the tunnelled packet is encrypted. In an alternative, encryption is not performed and each domain merely adds its own IP address to the source field.

In the embodiment, the ingress router 15 performs the encryption of packets sent from the client so that the packet header is encrypted as soon as it enters a new domain. In an alternative, the encryption is carried out by egress router 19 so that a packet header is not encrypted until it leaves a domain.

In another alternative, each ingress/egress router in a domain is configured to encrypt the header of each packet passing though the domain.

In the embodiment, the ingress router encrypts the packet header using a symmetrical key encryption method. In an alternative, the ingress router is configured to use an asymmetrical key encryption method such a PKI. This provides better security at the expense of processing speed.

## Claims

1. A method of transferring a response data packet from a server on first network domain to a client on second network domain, the first and second domain being separated by at least one intermediate domain, the response data packet having a source address and a destination address field containing routing information defining the order in which the data packet must travel from the first network domain to the second network domain via the at least one intermediate domain, two or more adjacent network domains along such route being non-reachable, the method comprising the steps of:
receiving a response data packet;
identifying the next domain for the data packet in accordance to the destination address field routing information;
updating the source address to include routing information identifying the path the data packet has taken to arrive at the destination; and
establishing a new alternative route via at least one further intermediate network domain to arrive at the intended network domain;
updating the destination address to include the new route between that domain and the intended destination domain; and
forwarding the data packet along the new route to the identified domain;
wherein,
in a case where the identified network domain is not reachable, updating the source address to include routing information identifying the path the data packet has taken to arrive at the destination; and
tunnelling the data packet via at least one further intermediate network domain to arrive at the intended network domain.

2. A method according to claim 1, wherein at least part of the routing information is encrypted and the method includes the step of encrypting or decrypting at least part of the source and/or destination address.

3. A method of transferring a response data packet from a server on a first network domain to a client on a second network domain, the response data packet having a destination address field containing the client's encrypted network address and a network address associated with the second network domain, the method comprising the steps of:
routing the response data packet from the server on the first domain to the network address associated with the second network domain;
decrypting the client's network address at the second domain; and
routing the response data packet to the client's network address;
wherein,
in a case where a connection between the first domain and the second domain is not available, tunnelling the response data packet by carrying out the steps of:
appending a network address associated with the first network domain to the source address of the response data packet; and
forwarding the response data packet to at least one further network domain located between the first network domain and the second network domain, the at least one further network domain being operable to route the response data packet to the second network domain.

4. A method according to claim 3, further comprising the step of encrypting a source address of the data packet with an encryption function associated with the first network domain;

5. A method according to claim 3 or claim 4, wherein the at least one further network domain is arranged to append a network address associated with that at least one further network domain.

6. A method according to claim 5, wherein the at least one further network domain is further arranged to encrypt the source address field of the response packet received by the at least one further network domain.

7. A method according to any of claims 3 to 6, wherein the response data packet is tunnelled via at least two further network domains, each further network domain being arranged to encrypt a received source address field of the data packet and to append a network address associated with that network domain.
